# EUROPÄISCHE PATENTSCHRIFT

(11) **EP 0 674 125 B1**
(45) Veröffentlichungstag und Bekanntmachung des Hinweises auf die Patenterteilung: **09.06.1999**
(21) Anmeldenummer: 95100780.6
(22) Anmeldetag: 20.01.1995
(51) Int. Cl.: F16H 63/30, F16H 3/38

(54) **Vorrichtung zur Betätigung der Synchronisation eines Vorwärtsganges beim Einlegen eines Rückwärtsganges**
Mechanism for actuating a forward gear synchroniser on selection of reverse gear
Mécanisme pour déplacer le synchronisateur d'un engrenage marche-avant lors de la sélection de marche-arrière

(30) Priorität: 23.03.1994 DE 4410048
(43) Veröffentlichungstag der Anmeldung: 27.09.1995
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Haas, Herbert, D-52074 Aachen (DE); Bernhardt, Bodo, D-50769 Köln (DE); Miller, Martin, D-50226 Frechen (DE)
(74) Vertreter: Messulam, Alec Moses

(56) Entgegenhaltungen:
- EP-A- 0 501 845
- DE-A- 3 147 782
- US-A- 5 016 488
- US-A- 5 119 917

## Beschreibung

Die Erfindung betrifft eine Vorrichtung zur Betätigung der Synchronisation eines Vorwärtsganges eines Getriebes beim Einlegen eines Rückwärtsganges des Getriebes zum Abbremsen des Aus- und Eingangsstranges des Getriebes, mit: einer Schaltstange zum Schalten des Getriebes; einer Schaltgabel zur Synchronisation des Vorwärtsganges mit einem Schaltgabelzapfen und einem darauf angeordneten Schwenkhebel mit einem Schwenkhebelzapfen.

Die Erfindung bezieht sich also auf eine Vorrichtung, die beim Einlegen des Rückwärtsganges bei Schaltgetrieben eine noch vorhandene Drehbewegung des Getriebeeingangsstranges durch Drücken auf die Synchronisation eines der Vorwärtsgänge abbremst und so ein Schalten ohne Geräusche und Verzögern ermöglicht.

Derartige Getriebe haben unterschiedlichste Anwendungsgebiete bei Antrieben, so bspw. bei Kraftfahrzeugen, Schiffen, Werkzeugmaschinen etc., bei denen die Drehrichtung des Antriebs geändert werden kann.

Ein besonders häufiges Anwendungsgebiet sind Kraftfahrzeuge. Bei vielen manuell betätigten Kfz-Schaltgetrieben ist der Rückwärtsgang nicht synchronisiert. Dies bereitet beim Schalten des Rückwärtsganges auch keine Probleme, solange die Viskosität des verwendeten Getriebeöles ausreichend hoch und das Trägheitsmoment der Kupplung ausreichend klein ist.

Die stetige Erhöhung der Motorleistungen und die Verwendung moderner Dieselmotoren haben zwangsläufig die Erhöhung des von der Kupplung zu übertragenden Drehmomentes und damit auch der Kupplungsabmessungen zur Folge. Daraus resultiert eine überproportionale Vergrößerung des Trägheitsmomentes und der Rotationsenergie des Getriebeeingangsstranges mit der Folge, daß sich der Getriebeeingangsstrang auch nach dem Kuppeln noch geraume Zeit weiterdreht.

Dieser Effekt wird noch verstärkt, wenn zur Verminderung der Verluste Getriebeöl mit niedriger Viskosität eingesetzt wird oder das Getriebe durch erhöhte Außentemperaturen und Abdeckungen sehr heiß wird.

Zum Schalten eines nicht synchronisierten Rückwärtsganges wird das auf einer stehenden Welle axial verschiebliche Zwischenrad zuerst in die entsprechende Verzahnung des Getriebeeingangsstranges eingeschoben. Dieser Vorgang ist problemlos, wenn sich der Eingangsstrang noch dreht, da das Zwischenrad ein sehr geringes Trägheitsmoment hat und deshalb ohne Geräusche und Verzögerung beschleunigt werden kann.

Probleme treten erst auf, wenn das sich drehende Zwischenrad weiter in die Verzahnung des Abtriebstranges geschoben wird, da dieser starr mit den Fahrzeugrädern gekoppelt ist. Da der Rückwärtsgang meist im Stehen geschaltet wird, führt der Versuch, das sich drehende Zwischenrad mit der daran gekoppelten Rotationsenergie des Antriebsstranges in eine stehende Verzahnung einzurasten, zwangsläufig zu unerwünschten Geräuschen und bei ausreichender Rotationsenergie auch zum kurzzeitigen Beschleunigen des Fahrzeuges.

Eine Bremsvorrichtung für den Getriebeeingangsstrang, die beim Schalten des Rückwärtsganges aktiviert wird, sollte demnach die folgenden wesentlichen Eigenschaften aufweisen:
- Die Bremsvorrichtung sollte nur während der Zeit, in der der Rückwärtsgang geschaltet wird, wirksam sein. Beim Fahren im Rückwärtsgang und in allen Vorwartsgängen darf die Bremse nicht wirken. Außerdem ist eine Verminderung des allgemeinen Getriebewirkungsgrades nicht erwünscht.
- Die Bremsvorrichtung sollte die Beschleunigung des Zwischenrades auf die dem Eingangsstrang angepaßte Geschwindigkeit nicht behindern, da sonst die Probleme auf diesen Teil des Schaltvorganges verlagert werden.
- Der Schaltkomfort und damit die über den Schalthebel aufzubringenden Kräfte dürfen sich nicht wesentlich verändern.
- Die Bremsvorrichtung darf nicht zum Blockieren neigen.
- Die Bremsvorrichtung muß preiswerter sein, als eine Synchronisierung des Rückwärtsganges.

Diese Forderungen lassen sich technisch auf vielfältige Art realisieren. Wegen des damit verbundenen Aufwandes scheiden dabei jedoch Konstruktionen und Prinzipien aus, die zwar technisch einwandfrei funktionieren, aber einen Aufwand erfordern, der größer ist, als der Aufwand für eine zusätzliche Synchronisation, wie zum Beispiel die Erzeugung von elektrischen Verlusten durch Wirbelstrombildung, so daß derzeit nur mechanische Konstruktionen als Bremseinrichtungen in Betracht kommen. Da der Antriebsstrang kontrolliert abgebremst und nicht durch Blockieren zum Stillstand gebracht werden muß, scheiden auch alle Konstruktionen mit Selbsthemmung aus.

Die nicht selbsthemmenden, mechanischen Bremskonstruktionen basieren stets auf Reibung, wobei aneinanderreibende Flächen kontrolliert aufeinandergepreßt werden. Sie brauchen immer eine Betätigungseinrichtung, um die Bremswirkung ein- und auszuschalten. Da die Bewegung des Schaltgestänges das einzige zuverlässige Signal ist, das das Schalten des Rückwärtsganges und damit die beginnende Verschiebung des Zwischenrades anzeigt, kann die Betätigung der Bremse auch nur hiervon abgeleitet werden und zwar so, daß die Betätigung zum richtigen Zeitpunkt wahrend des Verschiebens selbsttätig erfolgt. Dies ist im übrigen auch bei allen Getriebesynchronisationen so ausgeführt. Auf jeden Fall ist zu vermeiden, daß die Bremse durch Fehler oder Falschbedienung auch beim Schalten der Vorwärtsgänge betätigt wird.

Wenn zur Betätigung Kräfte in erheblichem Umfang aufzubringen sind, ist dies über das Schaltgestänge kaum noch zu realisieren. Deshalb sind Lösungen erforderlich, die zwar nicht selbsthemmend sind, aber dennoch mit akzeptabel geringen Betätigungskräften auskommen. Dazu muß im Maschinenelement selbst zwischen Betätigungskraft und Anpreßkraft eine Übersetzung vorgesehen sein, wie dies auch in den gebräuchlichen Getriebesynchronisationen durch konusförmige Reibflächen erfolgt.

Die dadurch erzeilten geringeren Betätigungskräfte können dann mechanisch von der Bewegung des Schaltgestänges abgegriffen oder auch von einer gegebenenfalls im Getriebe vorhandenen Ölversorgung abgezweigt werden. Die Erzeugung der Betätigungskräfte auf elektrischem Wege verursachen wegen der dazu erforderlichen zusätzlichen Bau-Elemente einen zusätzlichen Aufwand, der nur dann in Kauf genommen wird, wenn keine andere Möglichkeit zur Verfügung steht.

Die Abbremsung des Getriebeeingangsstranges kann vom Prinzip her an allen Bauteilen erfolgen, insbesondere an denen, die mit ihm formschlüssig verbunden sind. Dies ist einmal das Zwischenrad selbst nach dem Einschieben in die entsprechende Verzahnung.

Hierbei ist nachteilig, daß wegen der üblichen Übersetzungsverhältnisse das am Zwischenrad erforderliche Bremsmoment ungefähr dreimal größer ist, als ein Bremsmoment gleicher Wirkung, das am Eingangsstrang selbst angreift. Deshalb ist ein Konzept vorteilhaft, bei dem der Getriebeeingangsstrang direkt oder über eine günstige Übersetzung abgebremst werden kann. Wegen des Aufwands und der speziellen Gegebenheiten in Schaltgetrieben sind bekannte handelsübliche Bremsen ungünstig, so daß angepaßte Lösungen für das Abbremsen des Getriebeeingangsstranges erforderlich sind, die zudem einfacher sein müssen, als eine Synchronisation des Rückwärtsganges.

Als einfache, erprobte und zuverlässige Bremsen bieten sich die Synchronisationen der Vorwartsgänge an, da sie bereits im Getriebe als Bremseinrichtungen vorhanden sind. Zu bevorzugen ist dabei die Synchronisation des fünften Ganges, weil hierbei wegen der günstigen Übersetzung das geringste Bremsmoment erforderlich ist.

Aus der DE-A-23 19 396 ist bereits eine gattungsgemäße Schalteinrichtung für den Rückwärtsgang mit Abbremsung der Eingangswelle eines Kraftfahrzeugwechselgetriebes bekannt geworden. Diese Schalteinrichtung verwendet ein Schaltgestänge, bei dem beim Einlegen des Rückwärtsganges die Schaltgabel des dritten und vierten Vorwärtsganges die Antriebswelle durch den Synchronisationsring abbremst. Um eine ungewollte Betätigung des dritten bzw. vierten Ganges beim Einlegen des Rückwärtsganges zu verhindern, beschränkt eine Sperrklinke die Bewegung der Schaltgabel soweit, daß zwar die Synchronisation bremsend wirkt, der Vorwärtsgang jedoch nicht betätigt wird.

Nachteilig an dieser Schalteinrichtung ist, daß beim Einlegen des Rückwärtsganges sich das Schaltgestänge mit der Sperrklinke verhaken kann und dadurch der Schaltvorgang erschwert wird.

Auch aus der DE-A-23 19 397 ist eine gattungsgemäße Schalteinrichtung für den Rückwärtsgang mit Abbremsung der Eingangswelle bekannt geworden. Bei dieser Schalteinrichtung wird beim Einlegen des Rückwärtsganges durch eine Vorrichtung die Schaltgabel der Synchronisation eines Vorwärtsganges verschoben, so daß die Antriebswelle abgebremst wird. Dabei beschränkt eine Steuerkante die Bewegung der Schaltgabel, um ein Schalten in den Vorwärtsgang zu verhindern.

Durch die Verwendung einer Steuernut kann es zu einem Verhaken beim Einlegen des Rückwärtsganges kommen, wodurch der Schaltvorgang erschwert wird. Gleichzeitig kommt es zu einer Erhöhung der für das Schalten erforderlichen Kraft, so daß der Schaltkomfort deutlich abnimmt.

Es ist bereits bekannt, die Synchronisation des fünften Ganges durch spiegelbildlich angeordnete Synchronisationsringe ohne Gegenrad zu ergänzen, die beim Schalten des Rückwärtsganges zuerst gedrückt und dann blind durchgeschaltet werden. Beim Drücken wird der Getriebeeingangsstrang abgebremst und beim blinden Durchschalten wieder freigegeben.

Diese Einrichtung arbeitet bei richtiger Auslegung einwandfrei. Sie erfordert jedoch zusätzlichen Raum in axialer Richtung, der bei vielen quer eingebauten Motor- und Getriebeblöcken nicht mehr vorhanden ist, insbesondere dann nicht, wenn die Rückwärtsgangbremse in bestehenden Getriebekonstruktionen nachgerüstet werden soll.

Es ist Aufgabe der Erfindung, die Nachteile der bekannten Lösungen zu beheben und eine Vorrichtung zu konzipieren, die beim Schalten des Rückwärtsganges den Getriebeeingangsstrang in der oben beschriebenen Weise durch Drücken auf die Synchronisation eines der Vorwärtsgänge abbremst und nach dem Schalten des Rückwärtsganges die Sychronisation des Vorwärtsganges in die Ruhestellung zurückführt.

Es ist daher notwendig, einen nicht synchronisierten Rückwärtsgang mit einer preiswerten Bremsvorrichtung zu bestücken. Die Verwendung hochviskosen Öls hat den Nachteil eines schlechten Wirkungsgrades.
Erfindungsgemaß wird diese Aufgabe durch eine gattungsgemäße vorrichtung gelöst, die aufweist:
- eine am Schaltgabelzapfen ausgebildete Nockenkontur;
- einen Rollhebel mit einem Bolzen;
- einen Sperrhebelzapfen mit einem Sperrhebel und einer am Sperrhebel angeordneten Sperrhebelkontur; und
- einen Anschlagnocken am Getriebedeckel;
wobei der Sperrhebel über die exzentrische Rollhebelanordnung mit der Schaltgabelanordnung verbunden ist, so daß die Schaltbewegung der Schaltstange über die Sperrhebelkontur den Rollhebel zum Abwälzen auf einem Bolzen zwingt, wodurch der Rollhebel über die Nockenkontur über den Schaltgabelzapfen die Schaltgabel des Vorwärtsganges zuerst auf die Synchronisation des Vorwärtsganges drückt und vor Erreichen der Endposition von der Schaltstange entlastet.

Erfindungsgemäß wird ein einfacher, zuverlässiger und robuster Mechanismus geschaffen werden, der im vorhandenen Getriebegehäuse untergebracht werden kann. Durch das günstige Verhalten wird auch der Verschleiß der Vorrichtung vermindert.

Es ist vorteilhaft, daß eine Feder auf dem Sperrhebelzapfen den Sperrhebel gegen den Anschlag vorspannt und auf den Rollhebel wirkt, so daß vor Erreichen der Endposition der Schaltstange der Rollhebel selbsttätig ausklinkt und so die Synchronisation freigibt.

Dadurch wird erzielt, daß die Bremse des Antriebsstranges gelöst ist, bevor die Zahnräder des Rückwärtsganges wirksam ineinandergreifen.

Durch die Verwendung eines Anschlagnockens kann das Ausklinken des Sperrhebels an einem vorgegebenen Punkt des Schaltweges erzwungen werden. Dadurch ist das Ausklinken unabhängig vom Reibkoeffizienten zwischen Sperrhebel und Rollhebel.

Ein Anschlagbolzen am Rollhebel verhindert in vorteilhafter Weise ein Verklemmen des Rollhebels beim Auskuppeln des Rückwärtsganges.

Ist durch den Einbau die erforderliche Genauigkeit gewährleistet, kann die Kontur des Rollhebels zylindrisch oder konkav ausgebildet sein, wodurch sich die Konstruktion vereinfacht.

Der Rollhebel kann über eine Halterung am Getriebedeckel oder im Getriebe befestigt werden, so daß zusätzliche Befestigungsmittel entfallen.

Der Schwenkhebel kann so ausgelegt werden, daß er während des Schaltvorganges in den Rückwärtsgang die Synchronisation des Ganges betätigt und am Ende des Schaltvorganges die Schaltgabel der Synchronisation wieder in die Ruhestellung zurückzieht.

Der Rollhebel kann vorteilhafterweise einen hochfesten Kunststoff aufweisen. Dadurch wird Gewicht gespart und Dämpfungseigenschaften des Kunststoffes im Getriebe zum Tragen kommen. Als Kunststoff eignet sich bspw. faserverstärkter PEEK.

Um eine problemlose Kraftübertragung zwischen Schaltstange und Schaltnocken zu gewährleisten, ist es vorteilhaft die Schaltstange mit dem Schaltnocken über ein konisches Spannelement und eine mit dem konischen Spannelement zusammenwirkende Spannmutter rotationssteif und axial fest zu verbinden.

Nachfolgend wird die Erfindung anhand eines Fünfgang-Kraftfahrzeuggetriebes mit einem Rückwärtsgang sowie der begleitenden Zeichnung erläutert, wobei die Erfindung keineswegs nur auf dieses Ausführungsbeispiel eingeschränkt ist. Dabei zeigt:
- Fig. 1: eine schematische Schnittzeichnung durch wesentliche Teile der Vorrichtung;
- Fig. 2: eine senkrecht entlang der Linie B-B in Fig. 1 geschnittene Darstellung der Vorrichtung;
- Fig. 3: eine senkrecht entlang der Linie A-A in Fig. 1 geschnittene Darstellung der Vorrichtung; und
- Fig. 4: eine senkrecht entlang der Linie C-C in Fig. 3 geschnittene Darstellung der Vorrichtung.

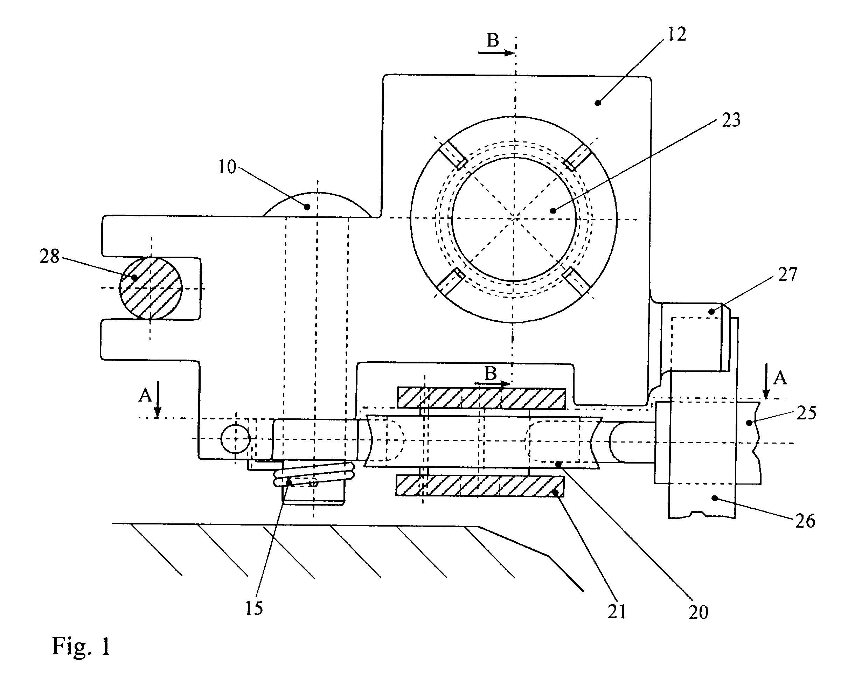

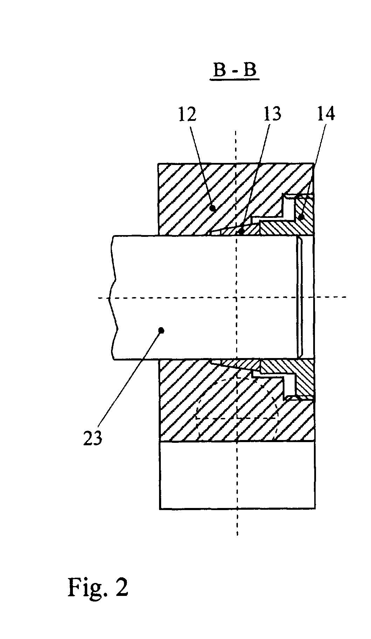

Wie in Figur 1 gezeigt, weist eine erfindungsgemäße Vorrichtung eine Schaltstange 23 auf, die mit einem Schaltnocken 12 mit Hilfe eines konischen Spannelementes 13 und einer Spannmutter 14 rotationssteif und axial fest verbunden ist (siehe Fig. 2). Ein gabelförmiger Fortsatz des Schaltnockens 12 für einen mit einem Getriebegehäuse verbundenen Stift 28 sichert den Schaltnocken 12 und die Schaltstange 23 in jeder Position des Verschiebeweges gegen Verdrehen.

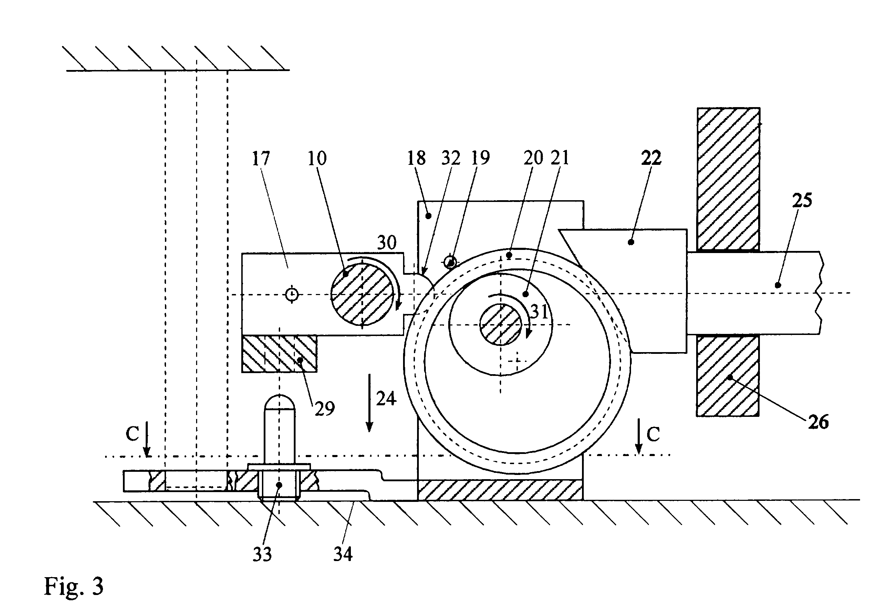

Das Schalten des fünften Ganges (Bewegungsrichtung entgegen der Bewegungsrichtung 24, siehe Fig. 3) erfolgt in gleicher Weise wie bisher: ein Schwenkhebelzapfen 27 des Schaltnockens 12 betätigt einen Schwenkhebel 26, der seinerseits über einen Schaltgabelzapfen 25 die Gabel der Synchronisation des fünften Ganges entgegen der Bewegungsrichtung 24 bewegt.

Beim Schalten des Rückwärtsganges (Bewegungsrichtung der Schaltstange 23 in Bewegungsrichtung 24 siehe Fig. 3) wird die Bewegung der Schaltgabel entgegen der Bewegungsrichtung 24 jedoch nicht mehr wie bisher blockiert, sondern soweit begrenzt, daß ein Durchschalten in den fünften Gang nicht möglich ist. Es ist jedoch möglich, während der Schaltbewegung in den Rückwärtsgang die Synchronisationsringe des fünften Ganges zu drücken. Dabei ist der Schwenkhebel 26 so gestaltet, daß die Schaltgabel der Synchronisation des fünften Ganges vom Schwenkhebelzapfen 27 in die Mittelstellung zurückgezogen wird, sobald die Schaltstange 23 die Endposition des Rückwärtsganges erreicht hat.

Damit ergibt sich bezüglich der Schaltung des fünften Ganges keine Änderung gegenüber den bisher gebrauchlichen Ausführungen.

Wie in Fig. 3 gezeigt, wird beim Schalten des Rückwärtsganges der Getriebeeingangsstrang erfindungsgemäß wie folgt abgebremst:

Im Schaltnocken 12 ist mit Hilfe eines Sperrhebelzapfens lo ein Sperrhebel 17 so gelagert, daß er von der in Fig. 3 dargestellten Ruhelage um ca. 90° geschwenkt werden kann. Eine Feder 15 bestimmt die Ruhelage des Sperrhebels 17, indem sie ihn gegen einen Anschlag 29 drückt. Der Sperrhebel 17 bleibt somit in seiner Ruhelage, solange Drehmomente auf ihn wirken, die einer Pfeilrichtung 30 entgegengesetzt sind oder die kleiner sind als das von der Feder 15 aufgebrachte Drehmoment.

Wenn sich nun die Schaltstange 23 mit dem daran befestigten Schaltnocken 12 zum Schalten des Rückwärtsganges geradlinig in Bewegungsrichtung 24 bewegt, verschiebt der Sperrhebel 17 zunächst einen Rollhebel 20 und dreht diesen, entgegengesetzt zur Pfeilrichtung 31, um einen mit einer Halterung 18 fest verbundenen Bolzen 21 solange, bis die Verbindungslinie zwischen dem Mittelpunkt des Rollhebels 20 und dem Mittelpunkt des Krümmungsradius einer Sperrhebelkontur 32 des Sperrhebels 17 senkrecht zur Bewegungsrichtung 24 steht.
Der so zur Drehung gezwungene Rollhebel 20 drückt seinerseits auf eine Nockenkontur 22 des Schaltgabelzapfens 25. Da der Schaltgabelzapfen 25 starr mit der Schaltgabel des fünften Ganges verbunden ist und sich diese nur in oder entgegengesetzt zur Bewegungsrichtung 24 bewegen kann, drückt der Rollhebel 20, solange seine Drehung einer Pfeilrichtung 31 entgegengesetzt ist, über die Schaltgabel des fünften Ganges auf dessen Synchronisation und erzeugt so die gewünschte Bremswirkung.

Die Andrückkraft auf die Synchronisation des fünften Ganges wird maximal, wenn die Verbindungslinie zwischen dem Mittelpunkt des Rollhebels 20 und dem Mittelpunkt des Krümmungsradius der Sperrhebelkontur 32 des Sperrhebels 17 senkrecht zur Bewegungsrichtung 24 steht. Sobald die Schaltstange 23 und der daran befestigte Schaltnocken 12 mit dem Sperrhebel 17 diesen Punkt überschritten haben, kann sich der Rollhebel 20 entsprechend der Pfeilrichtung 31 zurückdrehen und die Kraft auf die Synchronisation läßt nach.

Bei der weiteren Verschiebung der Schaltstange 23 in Bewegungsrichtung 24 wird ein Punkt erreicht, an dem die Kraft auf den Rollhebel 20 von der Sperrhebelkontur 32 ein Drehmoment in Pfeilrichtung 30 erzeugt, das den Sperrhebel 17 entgegen der von Feder 15 aufgebrachten Kraft verdreht. Dann läßt die Kraft auf die Nockenkontur 22 und auf die Schaltgabel schlagartig nach, so daß auch die Bremswirkung beendet ist.

Um das Ende der Bremswirkung unabhängig von aktuellen Reibungskoeffizienten zu machen, ist ein Anschlagnocken 33 vorgesehen, der die Drehung des Sperrhebels 17 begrenzt und damit die Entlastung der Synchronisation an einem fest definierten Punkt des Schaltweges erzwingt.

Damit ist sichergestellt, daß die Bremswirkung im geschalteten Zustand des Rückwärtsganges beendet ist.

Beim Auskuppeln des Rückwärtsganges wird die Schaltstange 23 zusammen mit dem Schaltnocken 12 und dem Sperrhebel 17 entgegen der Bewegungsrichtung 24 bewegt. Da der Sperrhebel 17 sich bei dieser Bewegungsrichtung nicht am Anschlag 29 abstützen kann, kann er auch keine nennenswerten Kräfte auf den Rollhebel 20 und die Schaltgabel übertragen, so daß das Auskuppeln weitgehend kraftfrei erfolgt. Um ein unter ungünstigen Reibverhältnissen mögliches Verklemmen des Rollhebels 20 bei dieser Auskuppelbewegung zu verhindern, ist seine Beweglichkeit durch einen Anschlagbolzen 19 begrenzt.

Durch entsprechende Wahl der Geometrie kann die kinematische Übersetzung des Rollhebels 20 in weiten Grenzen variiert und an die jeweiligen Erfordernisse angepaßt werden.

Hervorzuheben ist insbesondere die günstige Kraftübersetzung: Zu Beginn des Schaltvorganges in den Rückwärtsgang, wenn die erforderliche Kraft auf die Schaltgabel gering ist, ist die Übersetzung des Rollhebels 20 ungünstig. Wenn jedoch die zum Bremsen erforderliche Kraft hoch wird, ist die Kraftübersetzung sehr günstig, so daß keine Kraftspitzen am Schalthebel 23 auftreten, sondern nur ein Kraftverlauf, der zu Beginn leicht ansteigt und dann bis zum Ende der Schaltbewegung abfällt.

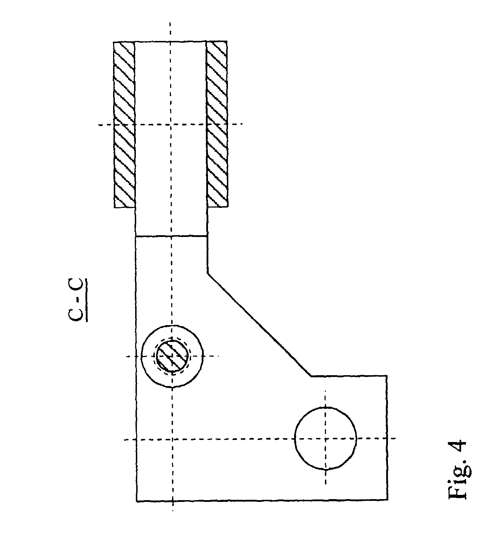

Der Rollhebel 20 und die Halterung 18 sind so klein bemessen, daß sie ohne zusätzliche Raumerfordernis ans Getriebe eingebaut werden können. Die Fig. 1, 3 und 4 zeigen die Befestigung der Halterung 18 des Rollhebels 20 am Getriebedeckel 34. Ohne Änderung der Funktion kann die Halterung 18 auch an Befestigungspunkten befestigt werden, die ohnehin im Getriebe vorhanden sind. Dazu können auch vorhandene, bearbeitete Flächen verwendet werden.

Die Walz- und Gleitbewegungen werden durch das Spritzöl des Getriebes geschmiert.

Die Vorrichtung enthält keine komplizierten Bauteile, und erfordert auch keine besondere Präzision. Deshalb sind Fertigung, Montage und Betrieb problemlos. Wegen des einfachen Aufbaues des Rollhebels 20 und der leicht zu realisierenden Bauteile wird erfindungsgemäß der Vorteil erreicht, daß der Aufwand kleiner, als für eine Synchronisation des Rückwärtsganges ist.

In den Fig. 1 und 3 wird ein Rollhebel 20 mit einer konkaven Außenfläche, in der sich die Sperrhebelkontur 32 des Sperrhebels 17 und die Nockenkontur 22 zentrieren, gezeigt. Wenn durch den Einbau die erforderliche Genauigkeit sichergestellt ist, kann die konkave Außenfläche des Rollhebels 20 auch durch eine einfache Zylinderfläche ersetzt werden, wodurch sich die Konstruktion weiter vereinfacht.

Zur Geräuschdämpfung des losen Rollhebels 20 können die Kontaktflächen der Halterung 18 und des Bolzens 21 mit einer dämpfenden Beschichtung, die bevorzugt elastisch ist, z. B. einem Kunststoff oder einer geeigneten metallischen Schicht, versehen werden. Eine weitere Möglichkeit besteht darin, den Rollhebel 20 mit hochfestem Kunststoff herzustellen, wie zum Beispiel faserverstärkten Kunststoffen, wie PEEK (Polyetheretherketon).

## Patentansprüche

1. Vorrichtung zur Betätigung der Synchronisation eines Vorwärtsganges eines Getriebes beim Einlegen eines Rückwärtsganges des Getriebes zum Abbremsen des Aus- und Eingangsstranges des Getriebes, mit
- einer Schaltstange (23) zum Schalten des Getriebes;
- einer Schaltgabel zur Synchronisation des Vorwärtsganges mit einem Schaltgabelzapfen (25) und einem darauf angeordneten Schwenkhebel (26) mit einem Schwenkhebelzapfen (27);
gekennzeichnet durch:
- eine am Schaltgabelzapfen (25) ausgebildete Nockenkontur (22);
- einen Rollhebel (20) mit einem Bolzen (21);
- einen Sperrhebelzapfen (10) mit einem Sperrhebel (17) und einer am Sperrhebel (17) angeordneten Sperrhebelkontur (32); und
- einen Anschlagnocken (33) am Getriebedeckel;
wobei der Sperrhebel (17) über die exzentrische Rollhebelanordnung (20) mit der Schaltgabelanordnung verbunden ist, so daß die Schaltbewegung der Schaltstange (23) über die Sperrhebelkontur (32) den Rollhebel (20) zum Abwälzen auf einem Bolzen (21) zwingt, wodurch der Rollhebel (20) über die Nockenkontur (22) über den Schaltgabelzapfen (25) die Schaltgabel des Vorwärtsganges zuerst auf die Synchronisation des Vorwärtsganges drückt und vor Erreichen der Endposition der Schaltstange (23) entlastet.

2. Vorrichtung nach Anspruch 1, dadurch gekennzeichnet, daß eine Feder (15) auf dem Sperrhebelzapfen (10) angeordnet ist, so daß sie den Sperrhebel (17) gegen den Anschlag (29) vorspannt und auf den Rollhebel (20) wirkt, wodurch vor Erreichen der Endposition der Schaltstange (23) der Rollhebel (20) selbsttätig ausklinkt und so die Synchronisation des Ganges freigibt.

3. Vorrichtung nach einem der vorangehenden Ansprüche dadurch gekennzeichnet, daß der Anschlagnocken (33) an einem vorgegebenen Punkt des Schaltweges angeordnet ist, so daß er das Ausklinken des Sperrhebels (17) erzwingt.

4. Vorrichtung nach einem der vorangehenden Ansprüche, dadurch gekennzeichnet, daß ein Anschlagbolzen (19) am Rollhebel (20) angeordnet ist, wodurch ein Verklemmen des Rollhebels (20) beim Auskuppeln des Rückwärtsganges durch den Anschlagbolzen (19) verhindert ist.

5. Vorrichtung nach einem der vorangehenden Ansprüche, dadurch gekennzeichnet, daß die Kontur (20a) des Rollhebels (20) zylindrisch oder konkav ist.

6. Vorrichtung nach einem der vorangehenden Ansprüche, dadurch gekennzeichnet, daß der Rollhebel (20) über eine Halterung (18) am Getriebedeckel (34) oder im Getriebe befestigt ist.

7. Vorrichtung nach einem der vorangehenden Ansprüche, dadurch gekennzeichnet, daß der Schwenkhebel (26) so ausgelegt ist, daß er während des Schaltvorganges in den Rückwärtsgang die Synchronisation des Ganges betätigt und am Ende des Schaltvorganges die Schaltgabel der Synchronisation wieder in die Ruhestellung zurückzieht.

8. Vorrichtung nach einem der vorangehenden Ansprüche, dadurch gekennzeichnet, daß der Rollhebel (20) einen hochfesten Kunststoff, bevorzugt faserverstärkten PEEK, aufweist.

9. Vorrichtung nach einem der vorangehenden Ansprüche, dadurch gekennzeichnet, daß die Schaltstange (23) mit dem Schaltnocken (12) über ein konisches Spannelement (13) und eine mit dem konischen Spannelement (13) zusammenwirkende Spannmutter (14) rotationssteif und axial fest verbunden ist.

## Claims

1. Device for actuating the synchronisation of a forward gear of a gearbox when engaging a reverse gear of the gearbox for braking of the output and input train of the gearbox, comprising
- a gear selector rod (23) for selecting the gear;
- a gear selector fork for synchronisation of the forward gear with a selector fork pin (25) and, mounted thereon, a swivelling lever (25) with a swivelling lever pin (27);
characterised by
- a cam contour (22) formed on the swivelling lever pin (25);
- a roller lever (20) with a pin (21);
- a blocking lever pin (10) with a blocking lever (17) and a blocking lever contour (32) on the blocking lever (17); and
- a stop cam (33) on the gearbox cover;
the blocking lever (17) being connected to the gear selector fork arrangement via the eccentric roller lever arrangement (20) so that the selection movement of the gear selector rod (23) forces the roller lever (20) to roll on a pin (21), whereby the roller lever (20), via the cam contour (22) and the selector fork pin (25) first presses the selector fork of the forward gear against the synchronisation of the forward gear and eases the pressure before the end position of the selector rod is reached.

2. Device according to claim 1, characterised in that a spring (15) is fitted on the blocking lever pin (10) so that the blocking lever (17) is urged against the stop (29) and acts on the roller lever (20), whereby before the end position of the selector rod is reached the roller lever (20) unlatches and thus frees the synchronisation of the gear.

3. Device according to any preceding claim, characterised in that the stop cam (33) is fitted at a predetermined point in the selection path, so that it forces the unlatching of the blocking lever (17).

4. Device according to any preceding claim, characterised in that a stop pin (19) is fitted on the roller lever (20), whereby jamming of the roller lever (20) when uncoupling the reverse gear is prevented by the stop pin (19).

5. Device according to any preceding claim, characterised in that the contour (20a) of the roller lever (20) is cylindrical or concave.

6. Device according to any preceding claim, characterised in that the roller lever (20) is fixed on the gearbox cover (34) or in the gearbox by means of a holder (18).

7. Device according to any preceding claim, characterised in that the swivelling lever (26) is designed in such a way that during the course of selecting the reverse gear it actuates the synchronisation of the gear and at the end of the selection the selector fork again withdraws the synchronisation into the rest position.

8. Device according to any preceding claim, characterised in that the roller lever (20) comprises a high-strength plastics material, preferably fibre-reinforced PEEK (polyether ether ketone).

9. Device according to any preceding claim, characterised in that the selector rod (23) is connected to the selector cam (12) in a rotationally stiff and axially fixed manner by means of a conical clamping element (13) and a clamping nut (14) which cooperates with the conical clamping element (13).

## Revendications

1. Dispositif d'actionnement du synchroniseur d'une vitesse avant d'une boîte de vitesses lors de l'enclenchement d'une vitesse arrière, afin de freiner la ligne de transmission de sortie et d'entrée de la boîte de vitesses, comprenant
- une tringle (23) de changement de vitesse pour passer les vitesses de la boîte,
- une fourchette de sélection pour synchroniser la vitesse avant, avec un tourillon (25) de fourchette de sélection sur lequel est disposé un levier pivotant (26) pourvu d'un tourillon (27) de levier pivotant,
**caractérisé** par:
- un contour de came (22) configuré sur le tourillon (25) de fourchette de sélection,
- un levier roulant (20) avec un axe (21),
- un tourillon (10) de levier d'arrêt, avec un levier d'arrêt (17) et un contour (32) de levier d'arrêt disposé sur le levier d'arrêt (17), et
- une came de butée (33) sur le couvercle de boîte,
le levier d'arrêt (17) étant relié à l'ensemble de fourchette de sélection par l'intermédiaire de l'ensemble excentrique de levier roulant (20), de sorte que le mouvement de changement de vitesse de la tringle (23) de changement de vitesse force, par l'intermédiaire du contour (32) de levier d'arrêt, le levier roulant (20) à rouler sur un axe (21), ce qui fait que le levier roulant (20), par l'intermédiaire du contour de came (22) et du tourillon (25) de fourchette de sélection, presse d'abord la fourchette de sélection de la vitesse avant sur le synchroniseur de la vitesse avant, puis la libère avant l'atteinte de la position finale de la tringle (23) de changement de vitesse.

2. Dispositif selon la revendication 1, **caractérisé** en ce qu'un ressort (15) est disposé sur le tourillon (10) de levier d'arrêt, de sorte qu'il précontraint le levier d'arrêt (17) contre la butée (29) et agit sur le levier roulant (20), ce qui fait que le levier roulant (20) se désenclenche automatiquement avant l'atteinte de la position finale de la tringle (23) de changement de vitesse, et libère ainsi le synchroniseur de ladite vitesse.

3. Dispositif selon l'une des revendications précédentes, **caractérisé** en ce que la came de butée (33) est disposée en un point prédéfini de la course de changement de vitesse, de sorte qu'il force le désenclenchement du levier d'arrêt (17).

4. Dispositif selon l'une des revendications précédentes, **caractérisé** en ce qu'un axe de butée (19) est disposé sur le levier roulant (20), de sorte que l'axe de butée (19) empêche le levier roulant (20) de se bloquer lors du désaccouplement de la vitesse arrière.

5. Dispositif selon l'une des revendications précédentes, **caractérisé** en ce que le contour (20a) du levier roulant (20) est cylindrique ou concave.

6. Dispositif selon l'une des revendications précédentes, **caractérisé** en ce que le levier roulant (20) est fixé par l'intermédiaire d'un support (18) sur le couvercle de boîte (34) ou dans la boîte de vitesses.

7. Dispositif selon l'une des revendications précédentes, **caractérisé** en ce que le levier pivotant (26) est conçu de telle sorte qu'il actionne le synchroniseur de ladite vitesse pendant le processus de passage de la vitesse arrière et, à la fin du processus de changement de vitesse, il ramène la fourchette de sélection du synchroniseur dans la position de repos.

8. Dispositif selon l'une des revendications précédentes, **caractérisé** en ce que le levier roulant (20) est constitué d'une matière plastique à haute résistance, de préférence de polyétheréthercétone renforcée par fibres.

9. Dispositif selon l'une des revendications précédentes, **caractérisé** en ce que la tringle (23) de changement de vitesse est assemblée rigidement en rotation et fixement en direction axiale à la came (12) de changement de vitesse par l'intermédiaire d'un élément de serrage conique (13) et d'un écrou de serrage (14) coopérant avec l'élément de serrage conique (13).
